# EUROPEAN PATENT SPECIFICATION

(11) **EP 2 505 932 B1**
(45) Date of publication and mention of the grant of the patent: **21.03.2018**
(21) Application number: 10832541.6
(22) Date of filing: 10.06.2010
(51) Int. Cl.: F24H 8/00, F24H 1/43, F24H 9/00, F28F 9/22, F28D 7/02, F28F 9/013

(54) **CONDENSING-TYPE HEAT EXCHANGER WITH HIGH EFFICIENCY**
KONDENSATOR-WÄRMETAUSCHER MIT HOHER EFFIZIENZ
ÉCHANGEUR DE CHALEUR DE TYPE À CONDENSATION AVEC RENDEMENT ÉLEVÉ

(30) Priority: 27.11.2009 CN 200910194321
(43) Date of publication of application: 03.10.2012
(73) Proprietor: Guangdong ROC Cool & Heat Equipment Co., Ltd., Zhanjiang, Guangdong 524094 (CN)
(72) Inventor: CHEN, Shaoshun, Zhanjiang Guangdong 524094 (CN)
(74) Representative: Hellmich, Wolfgang
(86) International application number: PCT/CN2010/073751
(87) International publication number: WO 2011/063634

(56) References cited:
- EP-A2- 2 072 938
- WO-A1-2007/066369
- WO-A1-2007/066369
- CN-A- 1 950 648
- CN-A- 101 726 109
- CN-Y- 2 767 901
- DE-A1-102004 018 956
- DE-A1-102004 018 956
- DE-U1- 29 602 990
- US-A1- 2007 209 606

## Description

### TECHNICAL FIELD OF THE INVENTION

The present invention belongs to a condensing-type heat exchanger with high efficiency. A condensing-type heat exchanger with high efficiency according to the preamble part of claim 1 is disclosed in US 2007/0209606 A1.

### BACKGROUND OF THE INVENTION

Currently, the existing condensing-type heat exchangers that are manufactured complicatedly at high cost are difficult to clean or maintain and are low in heat exchange efficiency.

US 2007/0209606 A1 discloses a heat exchanger and a water heater. The heat exchanger includes a housing and a heat-exchange water tube. The housing is provided with two water inflow chambers and two hot-water outflow chambers. The water tube includes a coiled tube which includes a first heat exchanging portion and a second heat exchanging portion. The first heat exchanging portion includes four upper tube modules, whereas the second heat exchanging portion includes two lower tube modules. The water heater includes a burner and a bottom casing. The burner is performed via a pipe. The heat exchanger may also comprise a plurality of water tubes and a pair of water inflow and hot-water outflow headers. The header has an end formed with a connection port to which a water inflow tube or a hot-water outflow tube. Also a plurality of spacers are provided in the heat exchanger.

### SUMMARY OF THE INVENTION

The object of the present invention is to improve the heat exchange efficiency of the condensing-type heat exchanger. This object is achieved by the subject matter of the independent claim.

Preferred embodiments of the invention are the subject matters of the dependent claims.

The condensing-type heat exchanger with high efficiency is composed of a tubular shell, an upper water tank, upper spiral casing pipes, a middle water tank, lower spiral casing pipes, a lower water tank and a U-shaped condensate-collecting fume extractor, wherein a screw-fixed gas elbow, an inverted combustor, a flame observer, an ignition detection probe and a water outlet are arranged on the top of the upper water tank; the upper water tank is connected with the middle water tank through a plurality of layers of upper spiral casing pipes to form a plurality of layers of channels; annular heat shielding rings with different diameters are fixed on the upper and lower outer diameters of each layer of spiral casing pipes; a plurality of elongated screw pitch fixing sheets are arranged on the periphery of each layer of spiral casing pipes to fix the spiral casing pipes uniformly; the gap between screw pitches of each layer of spiral casing pipes is determined by the distribution of heat exchange quantity, and the pipe diameter of each layer of spiral casing pipes is determined by the quantity of heat; the bottom of the middle water tank is connected with the lower water tank via a plurality of lower spiral casing pipes to form a plurality of channels; annular heat shielding rings with different diameters are fixed on the upper and lower outer diameters of each layer of spiral casing pipes; a plurality of elongated screw pitch fixing sheets are arranged on the periphery of each layer of spiral casing pipes to fix the spiral casing pipes uniformly; the gap between screw pitches of each layer of spiral casing pipes is determined by the distribution of heat exchange; the bottom of the lower water tank is provided with a connecting bolt for fixing the U-shaped condensate-collecting fume extractor and a water inlet.

The upper water tank is characterized by being an annular water tank having a groove on the peripheral outer diameter, wherein an O-shaped sealing ring is installed in the groove, a plurality of uniformly-distributed nuts are fixed on the top plane of the groove to fix, along with fixing sheets, the upper water tank using bolts; the inverted combustor installed in the inner ring of the upper spiral casing of the upper water tank; the flame observer installed on the upper water tank and the through hole of the ignition detection probe are both provided with spacers and peripherally communicated with the upper water tank; and a penniform spoiler is fixed inside the upper water tank.

The middle water tank, which is a disc-shaped water tank with a hemispheric top and a concave bottom, has a smaller outer diameter than upper water tank and lower water tank and is provided with corrugated lines; and a penniform spoiler is fixed inside the middle water tank.

The lower water tank, which is an annular water tank, has a smaller outer diameter than the upper water tank and is peripherally provided with a groove; an O-shaped sealing ring is installed in the groove to seal the shell; a connecting bolt is arranged on the bottom of the lower water tank to fix the condensate-collecting fume extractor; the lower water tank is provided with a water inlet; a plurality of uniformly-distributed nuts are fixed on the bottom plane of the lower water tank to connect the shell of lower water tank along with the fixing sheets and the bolts, and a penniform spoiler is fixed inside the lower water tank.

The plurality of layers of upper spiral casing pipes consist of a plurality of cased pipes that have difference in diameter and winded to various spiral diameters; each spiral casing pipe has upper pipe orifice and lower pipe orifice, which were connected with the bottom of the upper water tank and top of the middle water tank to form as many channels as the layers of the used spiral casing pipes; annular heat shielding rings with different diameters are fixed on the upper and lower parts of each layer of spiral casing pipes; the screw pitch of each layer of spiral casing pipes is fixed by a screw pitch fixing sheet, and the layers of the spiral casing pipes are determined by the power of the heat exchanger.

The plurality of layers of lower spiral casing pipes are structurally identical to the plurality of layers of upper spiral casing pipes, the pipe diameter and the spiral diameter of the lower spiral casing pipes are different, and the size of the lower spiral casing pipe is determined by the volume of heat exchange.

The condensate-collecting fume extractor is a U-shaped structure, the inner chamber at one end of the U-shaped condensate-collecting fume extractor is communicated with the inner ring of the lower water tank as well as the inner holes of the plurality of layers of lower spiral casing pipes; the water outlet is located on the bottom of the condensate-collecting fume extractor, and the other end of the U-shaped pipe is connected with fume extractor.

The screw pitch fixing sheet is an elongated sheet having a plurality of rows of vertical punched oblique sheets thereon, wherein the gradient of the oblique sheet is equal to the helical degree of the spiral casing pipes, and the protruded side and the bottom of the oblique sheet together form a thickness, which is equal to the gap between the spiral casing pipes; and the oblique sheets are all inserted into the gap between the spiral casing pipes so that the gap between the spiral casing pipes is unchanged when the spiral casing pipes are heated.

The flame observer is made of a square pipe, the two ends of which form a right angle; a 45-degree inclined plane is formed at the intersection of the right angle, a reflecting mirror and a reflecting mirror fixing cover are mounted on the inclined plane; the flame observer is installed on the top the upper water tank, a heat-insulating lens resistant to air leakage and high temperature is installed at the position where the flame observer is installed and connection, and the flame observer can convert a vertical image of the inside of the heat exchanger into a horizontal image.

The shell is in the shape of a cylinder having a small bottom diameter and a big upper diameter; and screwed holes are uniformly distributed on the upper part so that the inner components of the heat exchanger can be assembled easily from the top down. Screwed holes are uniformly distributed on the upper part, the lower part and the periphery of the cylinder to fix the fixing sheets to provide a detachable shell and detachable inner components.

The shell and the inner components of the heat exchanger provided herein can be detached to be cleaned and maintained, therefore, the heat exchanger with improved heat exchange efficiency is applicable to various products, including household heater, that heat water using gas.

### BRIEF DESCRIPTION OF THE DRAWINGS

Fig. 1 is a schematic diagram illustrating the structure of the condensing-type heat exchanger with high efficiency provided herein;
Fig. 2 is a left view of the condensing-type heat exchanger with high efficiency provided herein;
Fig. 3 is a top view of the condensing-type heat exchanger with high efficiency provided herein;
Fig. 4 is a diagram illustrating an amplified A;
Fig. 5 is a diagram illustrating an amplified B;
Fig. 6 is a schematic diagram illustrating components 7 and 14 of the condensing-type heat exchanger with high efficiency provided herein;
Fig. 7 is a left view of components 7 and 14 of the condensing-type heat exchanger with high efficiency provided herein;
Fig. 8 is a top view of components 7 and 14;
Fig. 9 is a diagram illustrating the structure of a component 2; and
Fig. 10 is a left view of the component 2.

### DETAILED DESCRIPTION OF THE EMBODIMENTS

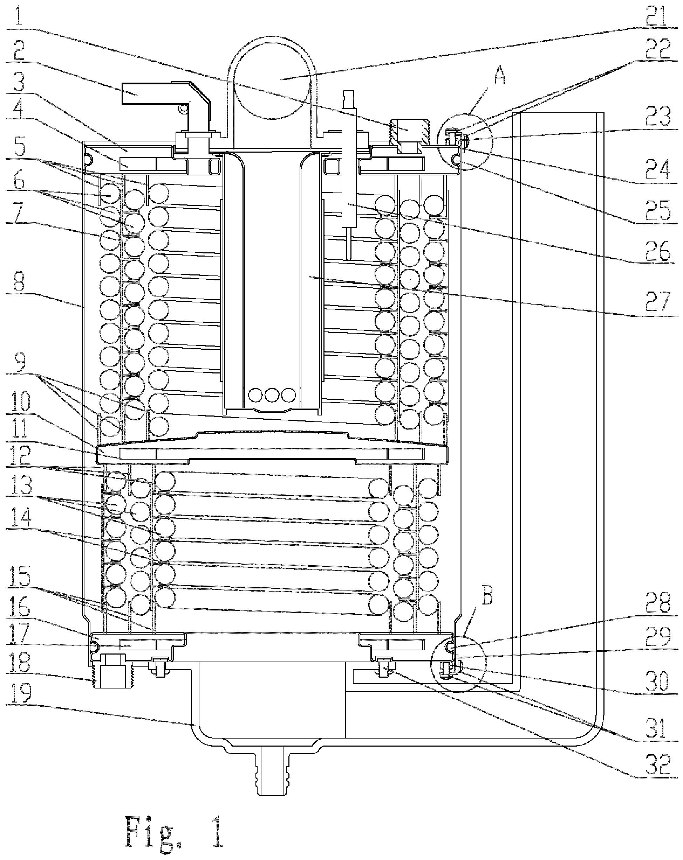

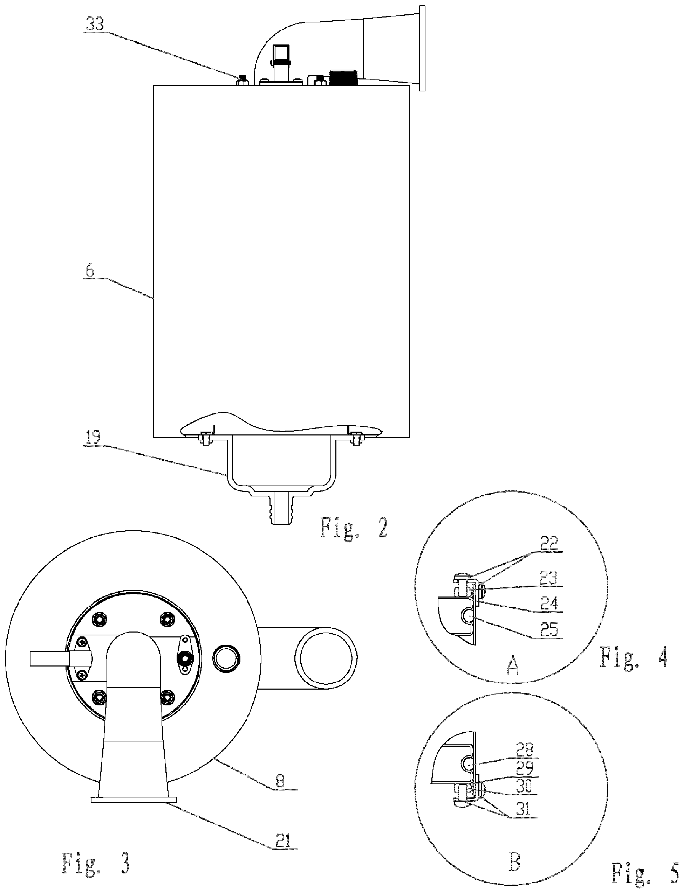

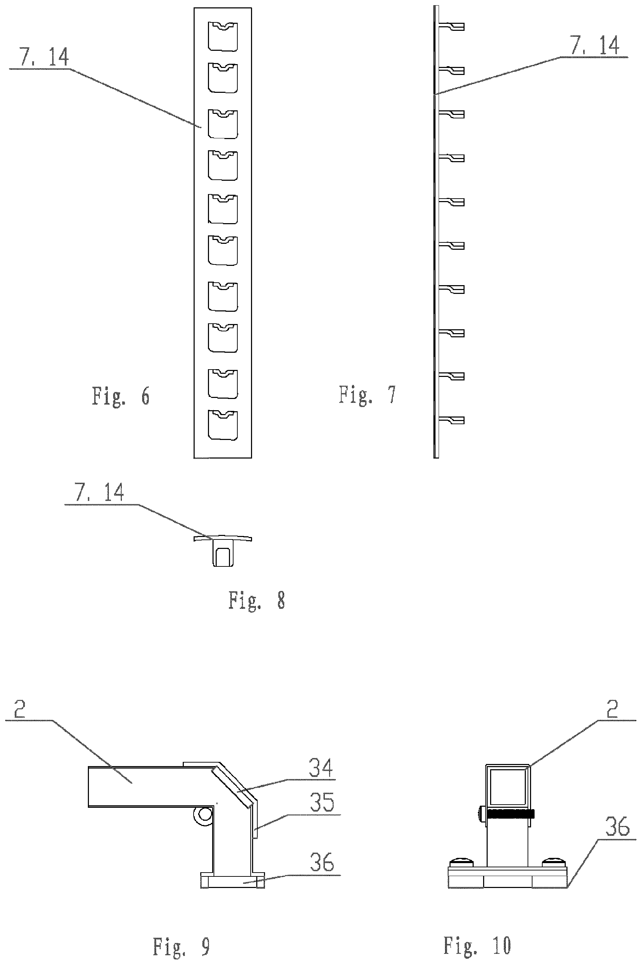

As shown in Fig. 1-Fig. 10, the heat exchanger is divided into a water-heat exchange loop and a combustion heating loop.

The water-heat exchange loop is implemented as follows: under the effect of the pressure, cold water flows into the lower water tank 16 via the water inlet 18, is disturbed by the spoiler 17 to temperature-uniform water, and then flows into the plurality of layers of lower spiral casing pipes 13 through connection openings arranged on the lower water tank 16; water flows through each layer of spiral casing pipes in a spiral direction and then flows into the middle water tank 10 through connection openings to be disturbed by the spoiler 11, then the temperature-uniform water flows into the upper spiral casing pipe 6 through connection openings of the middle water tank 10. Proceeding from the bottom of the heat exchanger up, water flows through each spiral casing pipe in a spiral direction and then into the upper water tank 3 via connection openings to be spoiled by the spoiler 4, and at last, the temperature-uniform water flows out the loop via the water outlet 1. Water is flow from down to up.

The combustion heating loop is implemented as follows: the upper water tank 3, the plurality of layers of upper spiral casing pipes 6, the middle water tank 10, the inverted combustor 27 and the ignition detection probe 26 form a combustion chamber. The gas that is premixed with air enters the inverted combustor 27 via the gas elbow 21, flows out the combustor via a fire hole on the combustor, and is then ignited by the ignition detection probe 26 to generate high-temperature thermal fume and radiate heat. The flowing water in lower water tank 10, the upper water spiral casing pipes 6 and the upper water tank 3 are heated for heating exchange. The fume generated during the combustion of gas with a certain pressure flows outwards. Due to the blocking of the annular heat shielding rings 5, 9, fume can only flow from inner layer to outer layer through the gap between the plurality of layers of upper spiral casing pipes 6. High-temperature fume contacts completely with each layer of spiral casing pipes to transfer the temperature and heat of the high-temperature fume to the water in the container. Therefore, the temperature of the high-temperature fume drops dramatically. Under the effect of combustion pressure, the fume flows downwards between the shell 8 and the outer wall of the middle water tank 10 and, due to the blocking of the lower annular heat shielding rings 12, 15, flows out from outer layer to inner layer only through the gap between the plurality of layers of lower spiral casing pipes 13. The fume contacts completely with each layer of spiral casing pipes as well as the bottom of the middle water tank 10 and the lower water tank 16 and then enters the plurality of layers of lower spiral casing pipes 13 to transfer heat to the water in the container. Therefore, the fume is cooled again and reaches the condensing temperature of vapor. Then, vapor is condensed into condensate. Due to the chemical reaction generated during the combustion process, a large amount of vapor is carried in the fume. Latent heat is released when the vapor is condensed into liquid. Through the above-described heat exchange, heat is transferred to the cold water in the container, thus increasing the heat exchange efficiency of the heat exchanger. The condensate flows into the U-shaped condensate-collecting fume extractor 19 under the effect of gravity, and is then drained off through an exhaust pipe; while low-temperature fume is exhausted from an exhaust port. In the combustion heating loop, flow proceeds from the top to down.

As a vertical convection of thermal fluid is achieved in the heat exchanger provided herein, the heat exchanger is improved in heat exchange efficiency.

## Claims

1. A condensing-type heat exchanger with high efficiency composed of a tubular shell, an upper water tank (3), upper spiral casing pipes (6), a middle water tank (10), lower spiral casing pipes (13), a lower water tank and a U-shaped condensate-collecting fume extractor, wherein a gas elbow (21), an inverted combustor (27) and a water outlet (1) are fixed on the top of the upper water tank (3); the upper water tank (3) is connected with the middle water tank (10) through a plurality of layers of upper spiral casing pipes (6) to form a plurality of layers of channels; a plurality of elongated upper screw pitch fixing sheets (7) are arranged on the periphery of each layer of upper spiral casing pipes (6) to fix the screw pitches of the upper spiral casing pipes (6) uniformly; the gap between the upper spiral casing pipes (6) in each layers is determined by the distribution of heat exchange quantity, and the diameter of each layer of upper spiral casing pipes (6) is determined by the quantity of heat; the bottom of the middle water tank (10) is connected with the lower water tank (16) via a plurality of layers of lower spiral casing pipes (13) to form a plurality of layers of channels; a plurality of elongated lower screw pitch fixing sheets (14) are uniformly arranged on the peripheral outer diameters of the lower spiral casing pipes (13) in each layer to fix the screw pitches of the lower spiral casing pipes (13) uniformly; the gap between the lower spiral casing pipes (13) in each layer is determined by the distribution of heat exchange quantity; and the bottom of the lower water tank (16) is provided with a water inlet (18)
**characterized in that**
the gas elbow (21), the inverted combustor (27), a flame observer (2) and an ignition detection probe (26) and the water outlet (1) are fixed on the top of the upper water tank (3) by screws (33); and
the condensing-type heat exchanger further comprises annular heat shielding rings (5, 9, 12, 15) with different diameters being fixed on the upper and lower outer diameters of each layer of the spiral casing pipes (6, 13).

2. The condensing-type heat exchanger with high efficiency according to claim 1, wherein the upper water tank (3) is a toroidal water tank having a groove on the peripheral outer diameter, an O-shaped sealing ring (25) is installed in the groove, a plurality of uniformly-distributed nuts (23) and a fixing sheet (24) are fixed on the upper water tank (3) via bolts (22); the inverted combustor (27) is installed in an inner ring of the upper spiral casing of the upper water tank (3); the flame observer (2) installed on the upper water tank (3) and the through hole of the ignition detection probe (26) are both provided with spacers and peripherally communicated with the upper water tank (3); and a penniform spoiler (4) is fixed inside the upper water tank (3).

3. The condensing-type heat exchanger with high efficiency according to claim 1 or 2, wherein the middle water tank (10) is a disc-shaped water tank with a hemispheric top and a concave bottom, the outer diameter of the middle water tank (10) is smaller than that of the upper water tank (3) and the lower water tank (16), the top of the middle water tank (10) is provided with corrugated lines; and a penniform spoiler (11) is fixed inside the middle water tank (10).

4. The condensing-type heat exchanger with high efficiency according to one of the preceding claims, wherein the lower water tank (16) is an annular water tank, the outer diameter of the lower water tank is smaller than that of the upper water tank (3), the outer diameter is peripherally provided with a groove; an O-shaped sealing ring (28) is installed in the groove to seal the shell (8); a connecting bolt (32) is arranged on the bottom of the lower water tank to fix the condensate-collecting fume extractor (19); the lower water tank is provided with a water inlet (18); a plurality of uniformly-distributed nuts (30) are fixed on the bottom plane of the lower water tank to fix the shell (8) of the lower water tank (16) along with the fixing sheets (29) and the bolts (31), and a penniform spoiler (17) is fixed inside the lower water tank (16).

5. The condensing-type heat exchanger with high efficiency according to one of the preceding claims, wherein the plurality of layers of upper spiral casing pipes (6) consist of a plurality of cased pipes that are different from each other in pipe diameter and winded to have different spiral diameters; each upper spiral casing pipe (6) has an upper pipe orifice that is connected with the bottom of the upper water tank (3) and a lower pipe orifice that is connected with the top of the middle water tank (10) so as to form as many channels as the layers of the used upper spiral casing pipes (6); the screw pitch of each layer of upper spiral casing pipes (6) is fixed by a screw pitch fixing sheet (7), and the layer of the upper spiral casing pipes (6) are determined by the power of the heat exchanger.

6. The condensing-type heat exchanger with high efficiency according to one of the preceding claims, wherein the plurality of layers of lower spiral casing pipes (13) are structurally identical to the plurality of layers of upper spiral casing pipes (6); the pipe diameter and the spiral diameter of the lower spiral casing pipes (13) are different, and the size of the lower spiral casing pipes (13) is determined by the heat exchange quantity.

7. The condensing-type heat exchanger with high efficiency according to one of the preceding claims, wherein the condensate-collecting fume extractor (19) is a U-shaped structure; the inner chamber at one end of the U-shaped condensate-collecting fume extractor is communicated with an inner ring of the lower water tank (16) as well as the inner holes of the plurality of layers of lower spiral casing pipes (13); a water outlet is arranged on the bottom of the condensate-collecting fume extractor (19); and the other end of the U-shaped pipe serves as a fume extractor.

8. The condensing-type heat exchanger with high efficiency according to one of the preceding claims, wherein the screw pitch fixing sheets (7, 14) are elongated sheets having a plurality of rows of vertical punched oblique sheets thereon, the gradient of the oblique sheets is equal to the helical degree of the spiral casing pipes (6, 13), and the protruded side and the bottom of the oblique sheet together form a thickness, which is equal to the gap between the spiral casing pipes (6, 13); and the oblique sheets are all inserted into the gap between the spiral casing pipes (6, 13) so that the gap between the spiral casing pipes (6, 13) is unchanged when the spiral casing pipes (6, 13) are heated.

9. The condensing-type heat exchanger with high efficiency according to one of the preceding claims, wherein the flame observer (2) is made of a square pipe, the two ends of which form a right angle; a 45-degree inclined plane is formed at the intersection of the right angle, a reflecting mirror (34) and a reflecting mirror fixing cover (35) are mounted on the inclined plane; the flame observer (2) is installed on the top the upper water tank (3), a heat-insulating lens (36) resistant to air leakage and high temperature is installed at the position where the flame observer is installed, and the flame observer (2) can convert a vertical image of the inside of the heat exchanger into a horizontal image.

10. The condensing-type heat exchanger with high efficiency according to one of the preceding claims, wherein the shell (8) is in the shape of a cylinder having a small bottom diameter and a big upper diameter; and screwed holes are uniformly distributed on the upper part, the lower part and the periphery of the cylinder to fix the fixing sheets (24, 29) to provide a detachable shell and detachable inner components.

## Patentansprüche

1. Ein Kondensator-Wärmetauscher mit hoher Effizienz, bestehend aus einer Mantelrohrhülse, einem oberen Wasserbehälter (3), oberen Spiralgehäuseleitungen (6), einem mittleren Wasserbehälter (10), unteren Spiralgehäuseleitungen (13), einem unteren Wasserbehälter und einem U-förmigen Kondensatsammel-Rauchabzug, wobei ein Gasbogenstück (21), eine umgedrehte Brennkammer (27) und ein Wasserauslass (1) auf der Oberseite des oberen Wasserbehälters (3) befestigt sind; wobei der obere Wasserbehälter (3) mit dem mittleren Wasserbehälter (10) über eine Vielzahl von Schichten von oberen Spiralgehäuseleitungen (6) verbunden ist, um eine Vielzahl von Schichten von Kanälen zu bilden; wobei eine Vielzahl von gestreckten oberen Schraubengewindegang-Befestigungsplatten (7) auf dem Umfang jeder Schicht der oberen Spiralgehäuseleitungen angelegt sind, um die Schraubensteigungen der oberen Spiralgehäuseleitungen (6) gleichmäßig festzulegen; wobei die Lücke zwischen den oberen Spiralgehäuseleitungen (6) in allen Schichten von der Verteilung der Wärmeaustauschmenge bestimmt wird, und der Durchmesser jeder Schicht der oberen Spiralgehäuseleitungen (6) von der Menge der Wärme bestimmt wird; wobei die Unterseite des mittleren Wasserbehälters (10) mit dem unteren Wasserbehälter (16) über eine Vielzahl von Schichten von unteren Spiralgehäuseleitungen (13) verbunden ist, um eine Vielzahl von Schichten von Kanälen zu bilden; wobei eine Vielzahl von gestreckten unteren Schraubengewindegang-Befestigungsplatten (14) auf den peripheren Außendurchmessern der unteren Spiralgehäuseleitungen (13) in jeder Schicht gleichmäßig angelegt sind, um die Schraubensteigungen der unteren Spiralgehäuseleitungen (13) gleichmäßig zu befestigen; wobei die Lücke zwischen den unteren Spiralgehäuseleitungen in jeder Schicht von der Verteilung der Wärmeaustauschmenge bestimmt wird; und die Unterseite des unteren Wasserbehälters (16) mit einem Wasserauslass (18) ausgestattet ist,
**dadurch gekennzeichnet, dass**
das Gasbogenstück (21), die umgedrehte Brennkammer (27), ein Flammenwächter (2) und eine Zündungserkennungssonde (26) und der Wasserauslass (1) auf der Oberseite des oberen Wasserbehälters (3) durch Schrauben (33) befestigt sind; und
der Kondensator-Wärmetauscher ferner ringförmige Wärmeabschirmringe (5, 9, 12, 15) mit unterschiedlichen Durchmessern umfasst, die auf den oberen und unteren Außendurchmessern einer jeden Schicht der Spiralgehäuseleitungen (6, 13) befestigt sind.

2. Der Kondensator-Wärmetauscher mit hoher Effizienz gemäß Anspruch 1, wobei der oberen Wasserbehälter (3) ein ringförmiger Wasserbehälter ist, der eine Nut auf dem peripheren Außendurchmesser aufweist, wobei ein O-förmiger Dichtring (25) in die Nut eingesetzt ist, wobei eine Vielzahl von gleichmäßig verteilten Muttern (23) und eine Befestigungsplatte (24) auf dem oberen Wasserbehälter (3) über Bolzen (22) befestigt sind; wobei die umgedrehte Brennkammer (27) in einem inneren Ring des oberen Spiralgehäuses des oberen Wasserbehälters (3) installiert ist; wobei sowohl der Flammenwächter (2), der auf dem oberen Wasserbehälter (3) installiert ist, als auch die Durchgangsbohrung der Zündungserkennungssonde (26) mit Abstandshaltern ausgestattet sind und peripher mit dem oberen Wasserbehälter (3) verbunden sind; und ein fächerförmiges Leitblech (4) im oberen Wasserbehälter (3) befestigt ist.

3. Der Kondensator-Wärmetauscher mit hoher Effizienz gemäß Anspruch 1 oder 2, wobei der mittlere Wasserbehälter (10) ein scheibenförmiger Wasserbehälter mit einer halbkugelförmigen Oberseite und einer konkaven Unterseite ist, wobei der Außendurchmesser des mittleren Wasserbehälters (10) kleiner als der des oberen Wasserbehälters (3) und des unteren Wasserbehälters (16) ist, wobei die Oberseite des mittleren Wasserbehälters (10) mit gewellten Linien ausgestattet ist; und ein fächerförmiges Leitblech (11) im mittleren Wasserbehälter (10) befestigt ist.

4. Der Kondensator-Wärmetauscher mit hoher Effizienz gemäß einem der vorangehenden Ansprüche, wobei der untere Wasserbehälter (16) ein ringförmiger Wasserbehälter ist, wobei der Außendurchmesser des unteren Wasserbehälters kleiner als der des oberen Wasserbehälters (3) ist, wobei der Außendurchmesser außen mit einer Nut ausgestattet ist; wobei ein O-förmiger Dichtring (28) in die Nut eingesetzt ist, um das Gehäuse (8) zu versiegeln; wobei ein Verbindungsbolzen (32) auf der Unterseite des unteren Wasserbehälters vorgesehen ist, um den Kondensatsammel-Rauchabzug (19) zu befestigen; wobei der untere Wasserbehälter mit einem Wassereinlass (18) ausgestattet ist; wobei eine Vielzahl von gleichmäßig verteilten Muttern (30) auf der Unterseitenfläche des unteren Wasserbehälters befestigt sind, um das Gehäuse (8) des unteren Wasserbehälters (16) zusammen mit den Befestigungsplatten (29) und den Bolzen (31) zu befestigen und wobei ein fächerförmiges Leitblech (17) im unteren Wasserbehälter (16) befestigt ist.

5. Der Kondensator-Wärmetauscher mit hoher Effizienz gemäß einem der vorangehenden Ansprüche, wobei die Vielzahl von Schichten der oberen Spiralgehäuseleitungen (6) aus einer Vielzahl von verkleideten Rohren besteht, die sich hinsichtlich Rohrdurchmesser voneinander unterscheiden und so gewunden sind, dass sie unterschiedliche Spiraldurchmesser aufweisen; wobei jede obere Spiralgehäuseleitung (6) eine obere Rohröffnung, die mit der Unterseite des oberen Wasserbehälters (3) und eine untere Rohröffnung, die mit der Oberseite des mittleren Wasserbehälters (10) verbunden ist, aufweist, um so viele Kanäle wie Schichten der verwendeten oberen Spiralgehäuseleitungen (6) zu bilden; wobei die Schraubensteigung einer jeden Schicht der oberen Spiralgehäuseleitungen (6) durch eine Schraubensteigung-Befestigungsplatte (7) befestigt ist und die Schicht der oberen Spiralgehäuseleitungen (6) von der Leistung des Wärmetauschers bestimmt wird.

6. Der Kondensator-Wärmetauscher mit hoher Effizienz gemäß einem der vorangehenden Ansprüche, wobei die Vielzahl von Schichten der unteren Spiralgehäuseleitungen (13) strukturell identisch mit der Vielzahl von Schichten der oberen Spiralgehäuseleitungen (6) sind; wobei der Leitungsdurchmesser und der Spiraldurchmesser der unteren Spiralgehäuseleitungen (13) unterschiedlich sind und die Größe der unteren Spiralgehäuseleitungen (13) durch die Wärmeaustauschmenge bestimmt wird.

7. Der Kondensator-Wärmetauscher mit hoher Effizienz gemäß einem der vorangehenden Ansprüche, wobei der Kondensatsammel-Rauchabzug (19) einen U-förmigen Aufbau hat; wobei die innere Kammer an einem Ende des Kondensatsammel-Rauchabzugs (19) sowohl mit einem inneren Ring des unteren Wasserbehälters (16) als auch mit den inneren Löchern der Vielzahl von Schichten der unteren Spiralgehäuseleitungen (13) in Verbindung steht; wobei sich ein Wasserauslass auf der Unterseite des Kondensatsammel-Rauchabzugs (19) befindet; und das andere Ende der U-förmigen Leitung als Rauchabzug dient.

8. Der Kondensator-Wärmetauscher mit hoher Effizienz gemäß einem der vorangehenden Ansprüche, wobei die Schraubengewindegang-Befestigungsplatten (7, 14) gestreckte Platten sind, die eine Vielzahl von Reihen von vertikal durchlochten schrägen Platten hierauf aufweisen, wobei die Neigung der schrägen Platten gleich dem Spiralgrad der Spiralgehäuseleitungen (6, 13) ist und die herausragende Seite und die Unterseite der schrägen Platte zusammen eine Dicke bilden, die gleich dem Zwischenraum zwischen den Spiralgehäuseleitungen (6, 13) ist; und wobei die schrägen Platten alle in den Zwischenraum zwischen den Spiralgehäuseleitungen (6, 13) eingefügt sind, so dass der Zwischenraum zwischen den Spiralgehäuseleitungen (6, 13) unverändert bleibt, wenn die Spiralgehäuseleitungen (6, 13) erhitzt werden.

9. Der Kondensator-Wärmetauscher mit hoher Effizienz gemäß einem der vorangehenden Ansprüche, wobei der Flammenwächter (2) aus einem Vierkantrohr hergestellt ist, deren beide Enden einen rechten Winkel bilden; wobei eine 45 Grad geneigte Fläche am Schnittpunkt des rechten Winkels gebildet wird, wobei ein reflektierender Spiegel (34) und eine reflektierende Spiegel-Befestigungsabdeckung (35) auf der geneigten Fläche montiert sind; wobei der Flammenwächter auf der Oberseite des oberen Wasserbehälters (3) installiert ist, wobei eine wärmeisolierende Linse (36), die gegen Luftlecks und hohe Temperatur resistent ist, an der Position installiert ist, wo der Flammenwächter (2) installiert ist, und wobei der Flammenwächter (2) ein vertikales Bild des Innereren des Wärmetauschers in ein horizontales Bild konvertieren kann.

10. Der Kondensator-Wärmetauscher mit hoher Effizienz gemäß einem der vorangehenden Ansprüche, wobei das Gehäuse (8) die Form eines Zylinders aufweist, der einen kleinen unteren Durchmesser und einen großen oberen Durchmesser hat; und wobei Gewindelöcher gleichmäßig auf dem oberen Teil, dem unteren Teil und dem Umfang des Zylinders verteilt sind, um die Befestigungsplatten (24, 29) zu befestigen, um eine ablösbare Hülle und ablösbare innere Komponenten vorzusehen.

## Revendications

1. Échangeur thermique de type à condensation avec rendement élevé composé d'une coque tubulaire, d'un réservoir d'eau supérieur (3), de tuyaux à gaine à spirales supérieure (6), d'un réservoir d'eau central (10), de tuyaux à gaine à spirales inférieure (13), d'un réservoir d'eau inférieur et d'un extracteur de fumée à collecte de condensat en forme de U, dans lequel un coude pour gaz (21), une chambre de combustion inversée (27) et une sortie d'eau (1) sont fixés sur le dessus du réservoir d'eau supérieur (3) ; le réservoir d'eau supérieur (3) est relié au réservoir d'eau central (10) à travers une pluralité de couches de tuyaux à gaine à spirales supérieure (6) de façon à former une pluralité de couches de canaux ; une pluralité de feuilles de fixation (7) à pas de vis supérieur allongé sont agencées sur la périphérie de chaque couche de tuyaux à gaine à spirales supérieure (6) pour fixer les pas de vis des tuyaux à gaine à spirales supérieure (6) de façon uniforme ; l'espacement entre les tuyaux à gaine à spirales supérieure (6) dans chacune des couches est déterminé par la répartition de la quantité d'échange thermique et le diamètre de chaque couche de tuyaux à gaine à spirales supérieure (6) est déterminé par la quantité de chaleur ; le fond du réservoir d'eau central (10) est relié au réservoir d'eau inférieur (16) via une pluralité de couches de tuyaux à gaine à spirales inférieure (13) de façon à former une pluralité de couches de canaux ; une pluralité de feuilles de fixation à pas de vis inférieur allongé (14) sont agencées de façon uniforme sur les diamètres extérieurs périphériques des tuyaux à gaine à spirales inférieure dans chaque couche pour fixer les pas de vis des tuyaux à gaine à spirales inférieure (13) de façon uniforme; l'espacement entre les des tuyaux à gaine à spirales inférieure (13) dans chaque couche est déterminé par la répartition de la quantité d'échange thermique; et le fond du réservoir d'eau inférieur (16) est pourvu d'une admission d'eau (18) ;
**caractérisé en ce que** :
le coude pour gaz (21), la chambre de combustion inversée (27), un observateur de flamme (2) et une sonde de détection d'allumage (26) et la sortie d'eau (1) sont fixés sur le dessus du réservoir d'eau supérieur (3) au moyen de vis (33) ; et
l'échangeur thermique de type à condensation comprend en outre des bagues à bouclier thermique (5, 9, 12, 15) annulaires avec différents diamètres fixées sur les diamètres extérieurs supérieur et inférieur de chaque couche des tuyaux à gaine à spirales (6, 13).

2. Échangeur thermique de type à condensation avec rendement élevé selon la revendication 1, dans lequel le réservoir d'eau supérieur (3) est un réservoir d'eau toroïdal ayant une gorge sur le diamètre extérieur périphérique, dans lequel un joint torique (25) est installé dans la gorge, une pluralité de rainures (23) réparties uniformément et une feuille de fixation (24) sont fixées au réservoir d'eau supérieur (3) via les boulons (22) ; la chambre de combustion inversée (27) est installée dans une bague intérieure de la gaine à spirales supérieure du réservoir d'eau supérieur (3) ; l'observateur de flamme (2) installé sur le réservoir d'eau supérieur (3) et le trou traversant de la sonde de détection d'allumage (26) sont tous deux pourvus d'entretoises et communiquent en périphérie avec le réservoir d'eau supérieur (3) ; et un déflecteur (4) en éventail est fixé à l'intérieur du réservoir d'eau supérieur (3).

3. Échangeur thermique de type à condensation avec rendement élevé selon la revendication 1 ou 2, dans lequel le réservoir d'eau central (10) est un réservoir d'eau en forme de disque avec un dessus hémisphérique et un fond concave, dans lequel le diamètre extérieur du réservoir d'eau central (10) est inférieur à celui du réservoir d'eau supérieur (3) et du réservoir d'eau inférieur (16), le dessus du réservoir d'eau central (10) est pourvu de lignes ondulantes ; et un déflecteur (11) en éventail est fixé à l'intérieur du réservoir d'eau central (10).

4. Échangeur thermique de type à condensation avec rendement élevé selon l'une quelconque des revendications précédentes, dans lequel le réservoir d'eau inférieur (16) est un réservoir d'eau annulaire, dans lequel le diamètre extérieur du réservoir d'eau inférieur est inférieur à celui du réservoir d'eau supérieur (3), dans lequel le diamètre extérieur est pourvu en périphérie d'une gorge ; un joint torique (28) est installé dans la gorge pour sceller la coque (8) ; un boulon de connexion (32) est agencé sur le fond du réservoir d'eau inférieur pour fixer l'extracteur de fumée (19) à collecte de condensat ; le réservoir d'eau inférieur est pourvu d'une admission d'eau (18) ; une pluralité de rainures (30) réparties uniformément sont fixées sur le fond plan du réservoir d'eau inférieur de façon à fixer la coque (8) du réservoir d'eau inférieur (16) avec les feuilles de fixation (29) et les boulons (31) et un déflecteur (17) en éventail est fixé à l'intérieur du réservoir d'eau inférieur (16).

5. Échangeur thermique de type à condensation avec rendement élevé selon l'une quelconque des revendications précédentes, dans lequel la pluralité de couches de tuyaux à gaine à spirales supérieure (6) consiste en une pluralité de tuyaux gainés différents les uns des autres dans le diamètre de tuyau et enroulés pour avoir différents diamètres de spirale ; chaque tuyau à gaine à spirales supérieure (6) a un orifice de tuyau supérieur qui est relié avec le fond du réservoir d'eau supérieur (3) et un orifice de tuyau inférieur qui est relié avec le dessus du réservoir d'eau central (10) de façon à former autant de canaux que les couches des tuyaux à gaine à spirales supérieure (6) utilisés ; le pas de vis de chaque couche de tuyaux à gaine à spirales supérieure (6) est fixé par une feuille de fixation de pas de vis (7) et les couches des tuyaux à gaine à spirales (6) sont déterminées par la puissance de l'échangeur thermique.

6. Échangeur thermique de type à condensation avec rendement élevé selon l'une quelconque des revendications précédentes, dans lequel la pluralité de couches de tuyaux à gaine à spirales inférieure (13) sont structurellement identiques à la pluralité de couches de tuyaux à gaine à spirales supérieure (6) ; le diamètre de tuyau et le diamètre de spirale des tuyaux à gaine à spirales inférieure (13) sont différents et la taille des tuyaux à gaine à spirales inférieure (13) est déterminée par la quantité d'échange thermique.

7. Échangeur thermique de type à condensation avec rendement élevé selon l'une quelconque des revendications précédentes, dans lequel l'extracteur de fumée (19) à collecte de condensat est une structure en forme de U ; la chambre intérieure a une extrémité de l'extracteur de fumée à collecte de condensat en forme de U qui communique avec une bague intérieure du réservoir d'eau inférieur (16) ainsi que les trous intérieurs de la pluralité de couches de tuyaux à gaine à spirales inférieure (13) ; une sortie d'eau est agencée sur le fond de l'extracteur de fumée (19) à collecte de condensat ; et l'autre extrémité du tuyau en forme de U sert d'extracteur de fumée.

8. Échangeur thermique de type à condensation avec rendement élevé selon l'une quelconque des revendications précédentes, dans lequel les feuilles de fixation (7, 14) de pas de vis sont des feuilles allongées ayant une pluralité de lignes de feuilles obliques perforées verticalement dessus, le gradient des feuilles obliques est égal au degré hélicoïdal des tuyaux à gaine à spirales (6, 13) et le côté saillant et le fond de la feuille oblique forment ensemble une épaisseur, égale à l'espacement entre les tuyaux à gaine à spirales (6, 13); et les feuilles obliques sont toutes insérées dans l'espacement entre les tuyaux à gaine à spirales (6, 13) de sorte que l'espacement entre les tuyaux à gaine à spirales (6, 13) est inchangé lorsque les tuyaux à gaine à spirales (6, 13) sont chauffés.

9. Échangeur thermique de type à condensation avec rendement élevé selon l'une quelconque des revendications précédentes, dans lequel l'observateur de flamme (2) est fabriqué à partir d'un tuyau carré dont les deux extrémités forment un angle droit ; un plan incliné à 45 degrés est formé à l'intersection de l'angle droit, un miroir réfléchissant (34) et un cache de fixation de miroir réfléchissant (35) sont fixés sur le plan incliné ; l'observateur de flamme (2) est installé sur le dessus du réservoir d'eau supérieur (3), une lentille thermo-isolante (36) résistante à la fuite d'air et aux hautes températures est installée dans la position dans laquelle l'observateur de flamme est installé et l'observateur de flamme (2) peut convertir une image verticale de l'intérieur de l'échangeur thermique en une image horizontale.

10. Échangeur thermique de type à condensation avec rendement élevé selon l'une quelconque des revendications précédentes, dans lequel la coque (8) prend la forme d'un cylindre ayant un petit diamètre de fond et un grand diamètre supérieur ; et les trous vissés sont répartis de façon uniforme sur la partie supérieure, la partie inférieure et la périphérie du cylindre de façon à fixer les feuilles de fixation (24, 29) pour fournir une coque détachable et des composants intérieurs détachables.
